# EUROPÄISCHE PATENTANMELDUNG

(11) **EP 1 074 323 A1**
(43) Veröffentlichungstag der Anmeldung: **07.02.2001**
(21) Anmeldenummer: 99810674.4
(22) Anmeldetag: 27.07.1999
(51) Int. Cl.: B23B 31/36

(54) **Vorrichtung mit einem justierbaren Einspannsystem**

(71) Anmelder: MDC Max Dätwyler Bleienbach AG, CH-3368 Bleienbach (CH)
(72) Erfinder: Ryf, Rudolf, 4913 Bannwil (CH)
(74) Vertreter: Roshardt, Werner Alfred, Dipl.-Phys.

(57) **Zusammenfassung**

Bei einer Vorrichtung mit einem Einspannsystem (8) zum zentrierten Halten eines Werkstückes bezüglich einer Rotationsachse (3) einer Drehlagereinrichtung (2.1, 2.2, 2.3, 4), ist das Einspannsystem (8) senkrecht zur Rotationsachse (3) verschiebbar gehalten. Es sind Betätigungsorgane vorgesehen, mit welchen das Einspannsystem (8) automatisch gesteuert relativ zur Drehlagereinrichtung (2.1, 2.2, 2.3, 4) verschoben werden kann, um eine präzise Zentrierung zu ermöglichen. Der Rundlauf wird zum Beispiel mit einem Abstandsensor gemessen. Vorzugsweise sind die Betätigungsorgane (37, 41) derart ausgebildet und angeordnet, dass die Zentrierung in zwei zueinander senkrecht stehenden Richtungen separat durchgeführt werden kann. Die Betätigungsorgane sind in einem mitrotierenden Teil (15) an einem Übergang zwischen Drehlagereinrichtung (2.1, 2.2, 2.3, 4) und Einspannsystem (8) integriert.

## Beschreibung

### Technisches Gebiet

Die Erfindung betrifft eine Vorrichtung mit einem Einspannsystem zum zentrierten Halten eines Werkstückes bezüglich einer Rotationsachse einer Drehlagereinrichtung.

### Stand der Technik

Auf dem Markt sind seit langem Bearbeitungszentren für Tiefdruck-Zylinder erhältlich (vgl. z. B. DUOSTAR der Firma MDC Max Dätwyler AG, Bleienbach, Schweiz).

Bei der Bearbeitung von Tiefdruck-Zylindern ist eine zentrierte Halterung des Zylinders von grosser Bedeutung. Ist beispielsweise der Zylinder beim Schälen nicht zentriert, muss ein grösserer Teil der Oberflächenbeschichtung entfernt werden, als angesichts der gegebenen maximalen Tiefe der eingravierten Näpfchen nötig wäre. Ferner muss im nachfolgenden Schritt eine (dem erhöhten Abtrag entsprechende) grössere Dicke der Oberflächenbeschichtung erzeugt werden. Dies hat sowohl eine erhöhte Bearbeitungszeit als auch einen erhöhten Bedarf an Beschichtungsmaterial zur Folge.

Üblicherweise werden Tiefdruck-Zylinder in Hochgeschwindigkeitsbearbeitungszentren zum Drehen, Schleifen und Polieren mit Hilfe von 3-backen Spannfuttern gehalten. Es hat sich gezeigt, dass die bekannten Spannfutter häufig mit zu geringer Präzision arbeiten und - falls überhaupt - nur mit beträchtlichem Aufwand eine Justierung der Zylinder-Achse erlauben.

### Darstellung der Erfindung

Aufgabe der Erfindung ist es, eine Vorrichtung der eingangs genannten Art zu schaffen, bei welcher das Werkstück (z. B. der Tiefdruck-Zylinder) sowohl optimal zentriert als auch mit grosser Kraft gehalten werden kann.

Die Lösung der Aufgabe ist durch die Merkmale des Anspruchs 1 definiert. Gemäss der Erfindung ist das Einspannsystem (z. B. ein Spannfutter bekannter Bauart) innerhalb gegebener Grenzen senkrecht zur Lagerachse verschiebbar gehalten und kann mit Hilfe von Betätigungsorganen automatisch gesteuert gegenüber der Drehlagereinrichtung verschoben werden, um eine präzise Zentrierung zu ermöglichen.

Der Vorteil dieser Konstruktion liegt darin, dass bekannte Spannfutter (mit an sich ungenügender Präzision) verwendet werden können. Am "vorderen" (d. h. dem Werkstück zugewandten) Ende befindet sich die Halterung des Einspannsystems. Diese Halterung ist vorzugsweise so ausgebildet, dass innerhalb gewisser Grenzen (welche durch die maximal erforderliche Justierung bestimmt sind) eine im Prinzip freie Verschiebbarkeit gegeben ist. Mit den Betätigungsorganen kann das Einspannsystem gegenüber der Halterung gezielt verschoben werden, bis die Mittelachse des Werkstücks mit der Rotationsachse des Drehlagers zusammenfällt.

Vorzugsweise sind die Betätigungsorgane so angeordnet und ausgebildet, dass in der Justierebene (welche senkrecht zur Lagerachse steht) in x- und y-Richtung isoliert zentriert werden kann. Es können z. B. zwei in einem 90° Winkel zueinander stehende Führungsmittel vorgesehen sein. Die Führungsmittel können durch Rippen und Rillen von zwei aufeinander gleitenden Maschinenteilen gebildet sein. Diesen Führungsmitteln sind die Betätigungsorgane zugeordnet, welche die Kraft zum Verschieben des Einspannsystems gegenüber der Halterung aufbringen.

Es ist aber auch denkbar, dass am Übergang zwischen der Halterung und dem Einspannsystem eine Gleitfläche vorgesehen ist, welche eine völlig freie Verschiebung innerhalb der Justierebene erlaubt.

Besonders vorteilhaft ist es, wenn die Betätigungsorgane am Übergang zwischen Halterung und Einspannsystem in den rotierenden Maschinenteilen integriert sind und wenn somit die Verschiebungskraft quasi von innen aufgebracht wird. Die Betätigungsorgane sind z. B. in der Halterung integrierte (und mit dieser rotierende) Hydraulik- oder Exzenter-Elemente.

Die Betätigungsorgane können auch aussen ortsfest angeordnet sein und impulsartig auf einen entsprechend ausgebildeten Einwirkungsteil (z. B. einen Ring des Einspannsystems) einwirken. Diese zweite Ausführungsform lässt sich mit einem gegenüber der ersten Ausführungsform geringerem Aufwand implementieren, hat aber den Nachteil, dass die Wirkung eines Impulses nicht sehr genau vorhergesagt werden kann und dass deshalb die optimale Zentrierung bis zu einem gewissen Grad nach einem Trial and Error-Verfahren gesucht werden muss. Ferner können impulsartige Einwirkungen zu einer erhöhten Abnutzung des Drehlagers führen.

Am Übergang zwischen der Drehlagereinrichtung und dem Einspannsystem können eine oder mehrere Gleitflächen vorgesehen sein. Diese bilden z. B. einen Teil der Führungsmittel. Wird ein auf Zug schliessendes Spannfutter verwendet, dann kann die Spannkraft gleichzeitig als Normalkraft auf die Gleitflächen verwendet werden und eine erhöhte Haft- und Gleitreibung schaffen, so dass sich das Einspannsystem nicht von selbst in der Halterung verschieben kann.

Um sicherzustellen, dass nach der Justierung keine Verschiebung mehr eintritt, können zusätzliche Spannmittel zur Erhöhung der Normalkraft auf die Gleitflächen vorgesehen sein. Die Spannmittel können z. B. Federn umfassen, welche das Einspannsystem in die Halterung ziehen. Für die Justierung werden die Federn zum Beispiel mit Hydraulik-Elementen entlastet. Es ist selbstverständlich auch möglich, ohne Federn zu arbeiten (und z. B. die zusätzliche Normalkraft direkt mit den Hydraulik-Elementen zu erzeugen).

Als Einspannsystem wird vorzugsweise ein Lamellen-Spannzangenfutter verwendet. Bei einer solchen wird die Spannkraft nicht durch drei oder vier Backen, sondern durch eine grosse Anzahl (z. B. 20-30) von kleinen, um die Öffnung des Futters herum radial angeordneten Lamellen aufgebracht. Diese Spann-Lamellen werden radial durch Druckfedern zurückgezogen, was einen grösseren Spannbereich pro Zange ergibt. Derartige Lamellen-Spannzangenfutter sind an sich bekannt und auf dem Markt erhältlich. Im Rahmen von Versuchen wurde festgestellt, dass diese für Bearbeitungszentren von Tiefdruck-Zylindern bisher noch nicht verwendeten Zangen sich gerade besonders gut für die genannten Bearbeitungszentren eignen.

Zur Durchführung der automatischen Justierung ist eine Messeinrichtung vorgesehen, welche eine Oberfläche des Werkstückes abtastet und die Betätigungsorgane zur zielgerichteten Zentrierung mit Korrektursignalen ansteuert. Bei einem Tiefdruck-Zylinder kann z. B. der Ballen (d. h. die zu bearbeitende Oberfläche) oder ein Laufring möglichst nahe beim Ballen ausgemessen werden. Diese Justierung erfolgt typischerweise bei rotierendem Zylinder.

Die Erfindung eignet sich insbesondere für die Verwendung im Tiefdruck-Bereich. Dabei ist nicht nur an Bearbeitungsstationen zum Schälen der Zylinder sondern auch zum Gravieren derselben zu denken. Auch bei Laser-Graviermaschinen kann es z. B. wichtig sein, dass der Zylinder automatisch optimal justiert werden kann.

Selbstverständlich ist die Erfindung nicht auf diese Anwendung beschränkt. Sie eignet sich im Prinzip für alle Maschinen zur rotierenden Bearbeitung von Werkstücken. Weitergehende Anwendungen sind nicht ausgeschlossen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen Achsenlängsschnitt einer Vorrichtung zum Halten eines Tiefdruck-Zylinders bei dessen Bearbeitung;
- Fig. 2: Ansicht D-D gemäss Fig. 1;
- Fig. 3: Ansicht E-E gemäss Fig. 1;
- Fig. 4: Ansicht C-C gemäss Fig. 1;
- Fig. 5: Schnittdarstellung eines ersten Betätigungselementes;
- Fig. 6: Schnittdarstellung eines zweiten Betätigungselementes.

Grundsätzlich sind in den Figuren gleiche Teile mit gleichen Bezugszeichen versehen.

### Wege zur Ausführung der Erfindung

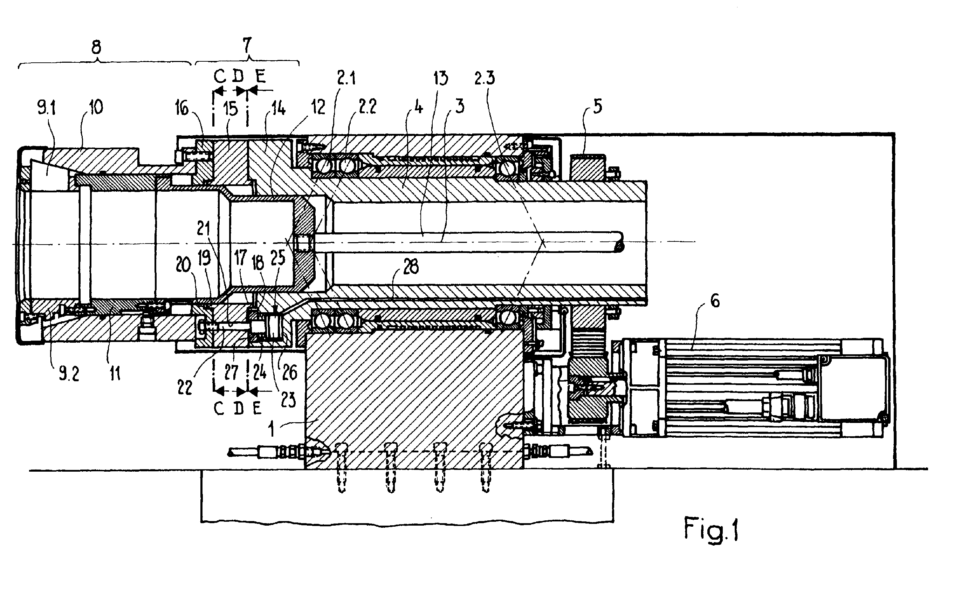

Fig. 1 zeigt einen Achsenlängsschnitt der im vorliegenden Zusammenhang interessierenden Maschinenteile einer Vorrichtung zum Halten eines Tiefdruck-Zylinders. In einem fest verankerten, tragenden Teil 1 ist ein Drehlager eingebaut, welches z. B. mehrere beabstandete Kugellager 2.1, 2.2, 2.3 aufweist. (Anstelle der Kugellager können natürlich auch andere Lager wie z. B. hydrostatische oder Magnetlager verwendet werden.) Es ist eine hohe Stabilität bezüglich der Rotationsachse 3 des Drehlagers angestrebt. Der rotierende Teil ist im wesentlichen durch eine Hohlwelle 4 gebildet, welche auf der (bezüglich des Drehlagers) hinteren Seite mit Hilfe eines Getriebes 5 durch einen Motor 6 angetrieben werden kann. Weitere Einzelheiten des Drehlagers brauchen an dieser Stelle nicht näher erläutert zu werden, weil sie bekannter Natur sind.

Am vorderen (d. h. dem Tiefdruck-Zylinder zugewandten) Ende der Hohlwelle 4 ist eine justierbare Halterung 7 vorgesehen. Diese trägt das Spannfutter 8, welche zum Einspannen des (nicht dargestellten) Achsendes des Tiefdruck-Zylinders dient. Gemäss einer besonders bevorzugten Ausführungsform handelt es sich beim Spannfutter 8 um ein Lamellen-Spannzangenfutter mit einer grossen Anzahl von Lamellen 9.1, 9.2. Die Lamellen 9.1, 9.2 stützen sich an der Innenseite eines Stützrings 10 ab. Der Stützring 10 kann direkt oder über weitere Zwischenteile durch die Halterung 7 gehalten sein.

Die gegenüber dem Stützring 10 verschiebbaren Lamellen 9.1, 9.2 sind mit einem Spannring 11 verbunden. Gemäss einer besonders bevorzugten Ausführungsform ist am hinteren Ende des Spannrings 11 eine Glocke 12 als Zwischenelement zur Zugstange 13 angebracht. Eine hinter dem Drehlager angeordnete (nicht dargestellte) Hydraulik-Einrichtung zieht beim Einspannen des Achsendes des Tiefdruck-Zylinders die Lamellen 9.1, 9.2 nach hinten und - infolge der zwischen Lamellen 9.1, 9.2 und Stützring 10 vorgesehenen Schrägflächen - nach innen zur Rotationsachse 3 hin.

Der Vorteil der Glocke 12 besteht darin, dass die Zylinderachse auch dann nahe beim Ballen des Zylinders erfasst und eingespannt werden kann, wenn sie mehrere (verschiedene) Laufringe aufweist. Wird auf die Glocke 12 verzichtet, ist der freie Innenraum zur Aufnahme des Endes der Zylinderachse kürzer.

In der vorliegenden Ausführungsform umfasst die Halterung 7 einen Flanschteil 14 und zwei Ringe 15, 16. Der Flanschteil 14 ist einstückig am vorderen Ende der Hohlwelle 4 ausgebildet. Der Ring 15 (dessen Innendurchmesser grösser ist als derjenige der Hohlwelle 4) schliesst unmittelbar an den Flanschteil 14 an, wobei zwischen den beiden Teilen Gleitflächen (vgl. z. B. Schnitt D-D) gebildet werden. Der Ring 15 ist innerhalb gewisser Grenzen gegenüber dem Flanschteil 14 verschiebbar. Die Grenzen sind durch das Spiel zwischen einer Ringschulter 17 und einer Aufnahme 18 bestimmt. Die Ringschulter 17 ist z. B. an der radialen Innenseite des Ringes 15 ausgebildet und steht in Axialrichtung zum Flanschteil 14 vor. Die Aufnahme 18 ist am Flanschteil 14 so ausgebildet, dass er die Ringschulter 17 aufnehmen kann und dabei einen Bewegungsfreiraum von z. B. einigen wenigen Zehntel Millimetern zulässt.

In sinngemässer Weise ist an der vorderen Seite des Ringes 15 eine Ringschulter 19 ausgebildet, welche in eine Aufnahme 20 des anschliessenden Ringes 16 eingreift (welcher in seinen radialen Abmessungen etwa gleich ist wie der Ring 15). Am Ring 16 ist im vorliegenden Beispiel der Stützring 10 des Lamellen-Spannzangenfutters festgeschraubt. Es ist somit erkennbar, dass das Spannfutter 8 gegenüber der Hohlwelle 4 in den Richtungen senkrecht zur Rotationsachse 3 verschiebbar bzw. justierbar ist.

Der Ring 15 weist mehrere auf seinen Umfang verteilte Durchgangsbohrungen auf, durch welche Bolzen hindurchgeführt sind. In Fig. 1 sind eine (im Ringe 15 angebrachte) Durchgangsbohrung 21 und ein Bolzen 22 dargestellt. Mit seinem vorderen Ende hält der Bolzen 22 mit Hilfe einer Mutter den Ring 16. Der Bolzen 22 hat in der Durchgangsbohrung 21 ein Spiel, das im wesentlichen dem Spiel zwischen den Ringen 15 und 16 entspricht.

Das hintere Ende des Bolzens weist einen Kopf 23 auf, welcher von vorne durch ein Federpaket 24 und von hinten durch eine Hydraulikeinrichtung 25 beaufschlagt ist bzw. beaufschlagt werden kann. Kopf 23, Federpaket 24 und Hydraulik Einrichtung 25 sind in einer Ausnehmung 26 des Flanschteils 14 untergebracht. Das Federpaket 24 ist gegen vorne an einem Stützring 27 abgestützt, welcher in die offene Seite der Ausnehmung 26 eingeschraubt ist.

Ist die Hydraulik nicht betätigt, sorgt das Federpaket 24 dafür, dass die Ringe 15, 16 nach hinten zum Flanschteil 14 gezogen werden und dass sie sich aufgrund der Haftreibung nicht quer zur Rotationsachse 3 verschieben können. Es ist möglich, mit mehreren Spannanordnungen der beschriebenen Art eine Kraft von insgesamt mehreren 10'000 kN zu erzeugen. Zu beachten ist, dass die beiden Ringe 15 und 16 nicht nur durch die Federpakete sondern auch durch die Spannkraft des Einspannsystems (welche über die Zugstange 13, die Glocke 12, den Spannring 11, die Lamellen 9.1, 9.2, und den Stützring 10 wirkt) gegeneinander gedrückt werden.

Mit der Hydraulikeinrichtung 25 kann die Wirkung der Federpakete während des Justierens teilweise oder ganz kompensiert werden, so dass die weiter unten beschriebenen Justierorgane zum Einsatz gebracht werden können. Die Hydraulikeinrichtung 25 wird durch eine in der Hohlwelle 4 integrierte Leitung 28 von hinten gespeist. Die (nicht dargestellte) Hydraulik-Kupplung, welche den Übergang zwischen der rotierenden Hohlwelle 4 und der ortsfesten Hydraulik-Speisung schafft, kann z. B. im Bereich der die Zugstange 13 betätigenden Hydraulik-Einheit vorgesehen sein.

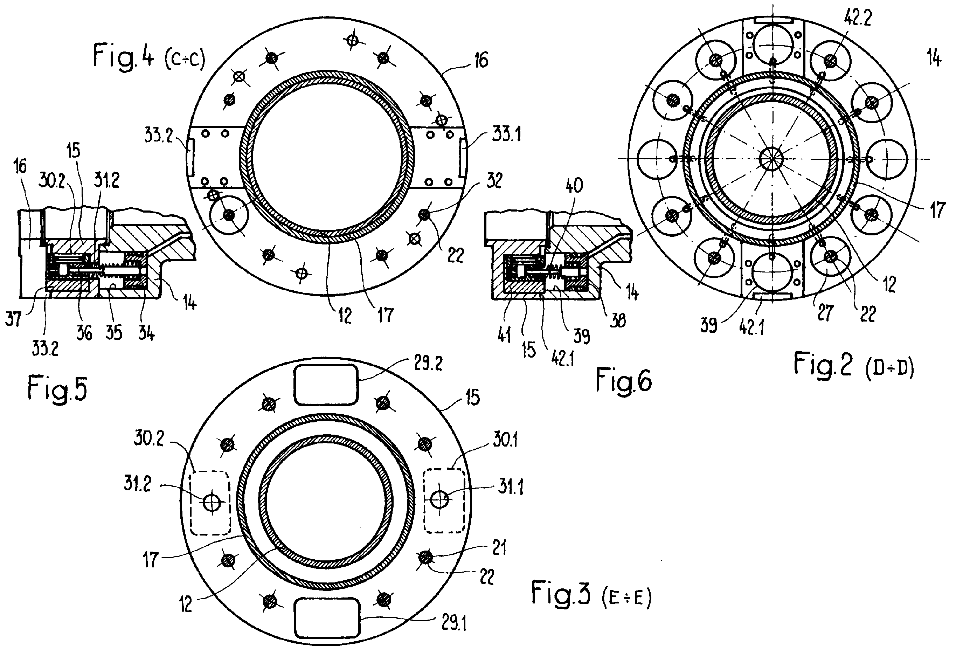

In Fig. 2 ist der Schnitt D-D aus Fig. 1 dargestellt. Es ist zu erkennen, dass insgesamt acht federbelastete Bolzen 22 vorgesehen sind (und zwar in den Stellungen 1 Uhr, 2 Uhr, 4 Uhr, 5 Uhr, 7 Uhr, 8 Uhr, 10 Uhr und 11 Uhr). In den Stellungen 6 Uhr und 12 Uhr befinden sich komplementär arbeitende Hydraulik-Elemente (vgl. Fig. 6), welche den Ring 15 bezüglich des Flanschteiles 14 in einer ersten Richtung senkrecht zur Rotationsachse 3 kontrolliert verschieben können. Zwei weitere, ebenfalls komplementär arbeitende Hydraulik-Elemente (vgl. Fig. 5) sind an den verbleibenden Stellungen 3 Uhr und 9 Uhr angeordnet. Sie verschieben den Ring 16 relativ zum Ring 15 in einer zweiten Richtung senkrecht zur Rotationsachse 3. Entsprechend einer besonders bevorzugten Ausführungsform der Erfindung erfolgt also die Justierung in zwei zueinander senkrecht stehenden Richtungen (im folgenden auch x- und y-Richtung genannt) unabhängig voneinander.

Im Schnitt E-E, welcher in Fig. 3 gezeigt ist, sind neben den acht axialen Durchgangsbohrungen (vgl. das beispielhafte Bezugszeichen 22) vier mehr oder weniger rechteckige Ausnehmungen 29.1, 29.2, 30.1, 30.2 eingezeichnet. Die genannten Ausnehmungen 29.1, 29.2, 30.1, 30.2 sind in axialer Richtung nicht durchgehend, damit die mechanische Stabilität des Ringes 15 nicht allzu stark reduziert wird. Die beiden ersten Ausnehmungen 29.1, 29.2 sind nur zu derjenigen Fläche des Ringes 15 offen, welche zum Flanschteil 14 zeigt. Die beiden zweiten Ausnehmungen 30.1, 30.2 sind zu derjenigen Fläche des Ringes 15 offen, welche zum Ring 16 zeigt, und haben zusätzlich eine kleine axiale Durchgangsbohrung 31.1, 31.2 zur gegenüberliegenden Fläche des Ringes 15.

Im Schnitt C-C der Fig. 4 (welcher die nach hinten gerichtete Fläche des Ringes 16 zeigt) sind die wiederum acht Bohrungen (vgl. die beispielhaft bezeichnete Bohrung 32) für die Bolzen 22 dargestellt. Ferner sind an den den Ausnehmungen 30.1, 30.2 gegenüberliegenden Stellen zwei Schultern 33.1, 33.2 vorgesehen. Sie bilden einen Anschlag für die nachfolgend beschriebenen Betätigungsorgane.

Fig. 5 zeigt beispielhaft das Betätigungsorgan zum Justieren des Ringes 16 bezüglich des Ringes 15 in der x-Richtung. Das Hydraulik-Element 34 (im Prinzip ein Hydraulik-Zylinder, welcher in einer Richtung parallel zur Rotationsachse 3 arbeitet) ist in einer Ausnehmung 35 des Flanschteils 14 angebracht und wird von hinten (über Speiseleitungen in der Hohlwelle 4) angesteuert. Ein Stössel 36 ist durch die Durchgangsbohrung 31.2 im Ring 16 hindurchgeführt und überträgt die Kraft vom Hydraulik-Element 34 auf eine kleine radial wirkende Presse 37. Die Presse 37 verwendet z. B. eine eingeschlossene verformbare Masse, welche unter der Wirkung des Stössels (nach einem hydraulischen Prinzip) eine Pressplatte verschiebt. Die Presse 37 ist fast vollständig versenkt in der Ausnehmung 30.2 des Ringes 15 untergebracht. Ein aus der Ausnehmung 30.2 herausragender Teil der Presse 37 wirkt auf die Schulter 33.2 des Ringes 16.

Es ist nun erkennbar, dass mit einem zweiten, gegengleich ausgerichteten Betätigungsorgan, dessen Presse in der Ausnehmung 30.2 angeordnet ist, der Ring 16 innerhalb des durch Ringschulter 19 und Ausnehmung 20 definierten Spiels gezielt und präzise in x-Richtung gegenüber dem Ring 15 verschoben werden kann.

Fig. 6 zeigt beispielhaft ein Betätigungsorgan für die y-Richtung. Auch dieses umfasst ein Hydraulik-Element 38, welches in einer Ausnehmung 39 an der Vorderseite des Flanschteils 14 integriert ist. Das Hydraulik-Element 38 wirkt ebenfalls mit einem Stössel 40 auf eine Presse 41 ein. Die Presse 41 ist in der Ausnehmung 29.1 des Ringes 15 untergebracht. Ein aus der Ausnehmung 29.1 herausragender Teil der Presse stützt sich auf eine Schulter 42.1 an der Vorderseite des Flanschteils 14.

Somit ist erkennbar, dass mit einem zweiten, gegengleich angeordneten Betätigungsorgan, dessen Presse in der Ausnehmung 29.2 untergebracht ist und sich auf die Schulter 42.2 stützt (vgl. Fig. 2), der Ring 15 innerhalb des zwischen diesem und dem Flanschteil 14 gegebenen Spielraums in y-Richtung justiert werden kann.

Im folgenden soll kurz der Ablauf des Einspannens und Justierens eines Tiefdruck-Zylinders erläutert werden. (Es versteht sich, dass für jedes Achsende des Zylinders ein System der in den Figuren 1 bis 6 beschriebenen Art vorgesehen ist.)

Im unbenutzten Zustand halten die Bolzen 22 und die Federpakete 24 das Spannfutter 8 in einer koaxialen Stellung zur Rotationsachse 3. (Das Spannfutter kann also nicht von der Achse "wegkippen".)

Als erstes wird das Achsende des Zylinders in das offene Lamellen-Spannzangenfutter 8 eingeführt. Dann wird das Spannfutter 8 geschlossen bzw. gespannt. Die Zentrierung des Zylinders stimmt aufgrund der Konstruktion der Halterung z. B. bereits bis auf +/-0.1 mm. Mit der nachfolgenden Justierung soll nun eine Zentrierung auf z. B. 2 Mikrometer Genauigkeit durchgeführt werden.

Der Zylinder wird mit dem Motor 6 in Drehung versetzt. Mit einem ortsfest auf der Maschine angebrachten Abstandssensor (z.B. einem berührend arbeitenden Messtaster oder einem berührungslos arbeitenden Laser-, Kapazitäts- oder Induktivitätssensor) wird die Mantelfläche des Ballens oder des Achsendes ausgemessen. (Der Ballen eines Tiefdruck-Zylinders ist der bearbeitete Teil des Zylinders. Am Achsende können hintereinander verschiedene Laufringe unterschiedlichen Durchmessers ausgebildet sein) Ist die Längsachse des Tiefdruck-Zylinders um z. B. 100 Mikrometer gegenüber der Rotationsachse des Drehlagers verschoben, detektiert der Sensor periodische Abstandsvariationen mit einer Amplitude von 100 Mikrometer.

Da die Winkelstellung des Zylinders bezüglich des Spannfutters 8 bekannt ist, kann die Exzentrizität des Zylinders auf zwei beliebige zueinander senkrechte Richtungen (in den Figuren 2 bis 4: auf x- und y-Richtung) umgerechnet werden. Mit den Betätigungsorganen gemäss Fig. 5 wird eine Korrektur in x-Richtung und mit den Betätigungsorganen gemäss Fig. 6 eine solche in y-Richtung durchgeführt. (Es versteht sich, dass die Stellung des Zylinders im Einspannsystem bekannt ist bzw. mit einem Winkelgeber gemessen werden kann, so dass das Sensor-Signal in das rotierende x-y Koordinatensystem umgerechnet werden kann.)

Gemäss einer bevorzugten Ausführungsform der Erfindung werden vor der Justierung (welche selbstverständlich bei gespanntem Lamellen-Spannzangenfutter durchgeführt werden muss) die Federpakete 24 mit Hilfe der Hydraulikeinrichtungen 25 kompensiert. Ist ein ausreichend zentrischer Lauf des Zylinders erreicht, werden die Hydraulikeinrichtungen 25 entspannt und die Federpakete 24 infolgedessen wieder aktiviert. Dadurch werden die Ringe 15, 16 mit einem gegenüber der Justierphase erhöhten Druck gegeneinander gepresst und sicher gehalten.

Die Erfindung beschränkt sich nicht auf das beschriebene Ausführungsbeispiel. Es sind vielfältige Abhandlungen möglich. Anstelle der im Ring 15 integrierten Betätigungsorgane kann auch ein von aussen auf einen der Ringe schlagender Hammer vorgesehen sein, welcher elektronisch gesteuert zum richtigen Zeitpunkt einen Schlag ausführt und den Ring gezielt verschiebt, so dass das Einspannsystem durch eine Reihe von Schlägen sukzessive zentriert werden kann.

Es gibt eine Vielzahl von Alternativen zu den konkret beschriebenen Betätigungsorganen. Anstelle der Pressen mit verformbarer Masse können auch solche mit Keilen oder mit Exzentern verwendet werden. Sind hohe Kräfte erforderlich, wird man in der Regel hydraulische Organe bevorzugen. Grundsätzlich ist aber nicht ausgeschlossen, dass motorisch betriebene Systeme verwendet werden.

Die Pressen, welche eine Verschiebung des Ringes 15 gegenüber dem Flanschteil 14 bewirken, können statt im Ring 15 auch im Flanschteil 14 untergebracht sein. Sinngemäss können auch die zwischen Ring 15 und Ring 16 wirkenden Pressen im Ring 16 statt im Ring 15 angeordnet sein. Es versteht sich, dass die Kraftübertragung von den Hydraulik-Elementen 34 bzw. 38 auf die Pressen 37 bzw. 41 derart "flexibel" sein muss, dass die Verschiebung der Ringe 15 bzw. 16 möglich ist.

Das Lamellen-Spannzangenfutter 8 kann durch ein Drei- oder Vierbackenfutter ersetzt werden. Wesentlich ist allein, dass der durch die Justierung abdeckbare Bereich mindestens so gross ist wie der maximale Einspannfehler des Spannfutters.

Ist eine sehr präzise Justierung erforderlich, ist die Trennung der Justierung in x-Richtung und y-Richtung bevorzugt. Es sind aber auch Anwendungen denkbar, bei welchen es genügt, wenn mit geeignet verteilten Betätigungsorganen auf einen in einer Ebene frei bewegbaren Ring eingewirkt wird. Mit anderen Worten: Statt mit Justierorganen in zwei voneinander axial getrennten Ebenen zu arbeiten (vgl. Schnittebenen C-C und D-D in Fig. 1), kann auch mit mehreren Organen in einer Ebene gearbeitet werden.

Schliesslich ist auch zu erwähnen, dass auf die zusätzlichen Mittel zum Spannen der Halterung (nämlich auf die Federpakete 24) auch verzichtet werden kann. Ebenfalls ist es möglich, die Federpakete weniger stark auszugestalten und auf eine hydraulische Entlastung zu verzichten.

Zusammenfassend ist festzustellen, dass mit der Erfindung die Möglichkeit geschaffen wird, insbesondere schwere Werkstücke wie z. B. Tiefdruck-Zylinder mit hoher Genauigkeit für die drehende Bearbeitung zu zentrieren bezüglich einer Rotationsachse eines Drehlagers. Die Zentrierung muss nicht von Hand durchgeführt werden, sondern kann automatisch gesteuert ablaufen.

## Patentansprüche

1. Vorrichtung mit einem Einspannsystem (8) zum zentrierten Halten eines Werkstückes bezüglich einer Rotationsachse (3) einer Drehlagereinrichtung (2.1, 2.2, 2.3, 4), dadurch gekennzeichnet, dass das Einspannsystem (8) senkrecht zur Rotationsachse (3) verschiebbar gehalten ist und dass Betätigungsorgane (37, 41) vorgesehen sind, mit welchen das Einspannsystem (8) automatisch gesteuert relativ zur Drehlagereinrichtung (2.1, 2.2, 2.3, 4) verschiebbar ist, um eine präzise Zentrierung zu ermöglichen.

2. Vorrichtung nach Anspruch 1, dadurch gekennzeichnet, dass die Betätigungsorgane (37, 41) derart ausgebildet und angeordnet sind, dass die Zentrierung in zwei zueinander senkrecht stehenden Richtungen separat durchgeführt werden kann.

3. Vorrichtung nach einem der Ansprüche 1 oder 2, dadurch gekennzeichnet, dass die Betätigungsorgane (37, 41) in einem mitrotierenden Teil (15) an einem Übergang zwischen Drehlagereinrichtung (2.1, 2.2, 2.3, 4) und Einspannsystem (8) integriert sind.

4. Vorrichtung nach Anspruch 3, dadurch gekennzeichnet, dass zwischen Drehlagereinrichtung (2.1, 2.2, 2.3, 4) und Einspannsystem (8) mindestens eine Gleitfläche senkrecht zur Rotationsachse (3) vorgesehen ist und dass Spannmittel (24) vorgesehen sind, um das Einspannsystem (8) gegen die Gleitfläche zu drücken zur Erhöhung einer Reibungswirkung.

5. Vorrichtung nach Anspruch 4, dadurch gekennzeichnet, dass die Spannmittel (24) während des Justierens mindestens teilweise entlastet werden können.

6. Vorrichtung nach einem der Ansprüche 1 bis 5, dadurch gekennzeichnet, dass die Betätigungsorgane (37, 41) Hydraulik-Elemente umfassen.

7. Vorrichtung nach einem der Ansprüche 1 bis 6, dadurch gekennzeichnet, dass das Einspannsystem (8) ein Lamellen-Spannzangenfutter ist.

8. Vorrichtung nach einem der Ansprüche 1 bis 7, dadurch gekennzeichnet, dass eine Messeinrichtung vorgesehen ist, welche eine Oberfläche des Werkstückes abtastet und Korrektursignale zur Ansteuerung der Betätigungsorgane (37, 41) erzeugt.

9. Verwendung einer Vorrichtung nach Anspruch 1 zum Einspannen eines Tiefdruck-Zylinders in einer Oberflächenbearbeitungsmaschine.

10. Verwendung nach Anspruch 9, bei welcher das Einspannsystem (8) ein Lamellen-Spannzangenfutter ist.
